# EUROPÄISCHE PATENTSCHRIFT

(11) **EP 2 337 976 B1**
(45) Veröffentlichungstag und Bekanntmachung des Hinweises auf die Patenterteilung: **06.03.2013**
(21) Anmeldenummer: 09783535.9
(22) Anmeldetag: 29.09.2009
(51) Int. Cl.: F16H 61/14

(54) **VERFAHREN ZUM BETÄTIGEN EINER KUPPLUNG EINES HYDRODYNAMISCHEN DREHMOMENTWANDLERS**
METHOD FOR THE OPERATION OF A CLUTCH OF A HYDRODYNAMIC TORQUE CONVERTER
PROCÉDÉ D'ACTIONNEMENT D'UN EMBRAYAGE D'UN CONVERTISSEUR DE COUPLE HYDRODYNAMIQUE

(30) Priorität: 23.10.2008 DE 102008043108
(43) Veröffentlichungstag der Anmeldung: 29.06.2011
(73) Patentinhaber: ZF Friedrichshafen AG, 88038 Friedrichshafen (DE)
(72) Erfinder: HÖFLER, Hans, 88090 Immenstaad (DE); KURZ, Thomas, 88085 Langenargen (DE)
(86) Internationale Anmeldenummer: PCT/EP2009/062596
(87) Internationale Veröffentlichungsnummer: WO 2010/046207

(56) Entgegenhaltungen:
- EP-A- 1 801 294
- FR-A- 2 557 518
- US-A- 5 621 643
- US-A- 5 720 358
- US-A1- 2008 242 502

## Beschreibung

Die Erfindung bezieht sich auf ein Verfahren zum Betätigen einer Kupplung eines hydrodynamischen Drehmomentwandlers nach der im Oberbegriff von Anspruch 1 näher definierten Art (siehe US 5 621 643A).

Gattungsgemäße Kupplungen in Drehmomentwandlern werden im Schließsinne betätigt, um den Antrieb mit dem Abtrieb des Drehmomentwandlers zu verbinden, wodurch ein direkter Durchtrieb vom Antrieb zum Abtrieb stattfindet, was eine Wirkungsgradverbesserung zur Folge hat. Häufig werden diese Kupplungen im Schließsinne betätigt, wenn das Turbinendrehmoment zum Pumpendrehmoment bei geschlossene oder offener Kupplung nahezu gleich groß ist. Diese Schaltpunkte werden durch die Drehzahldifferenz zwischen dem Pumpenrad umd dem Turbinenrad des hydrodynamischen Drehmomentwandlers ermittelt.

Arbeitsmaschinen, wie beispielsweise landwirtschaftliche Fahrzeuge, oder Baumaschinen, wie Radlader, weisen zusätzlich einen Nebenabtrieb auf, welcher direkt mit dem Antrieb des Drehmomentwandlers in Wirkverbindung steht.

Die DE 33 47 256 C2 offenbart eine Steuereinrichtung für die Überbrükkungskupplung eines hydrodynamischen Drehmomentwandlers, bei welcher ein Nebenabtrieb in Form einer Zapfwelle vom Antriebsmotor angetrieben und die Überbrückungskupplung dann im Öffnungssinne betätigt wird, wenn ein Unterschreiten der unteren Zapfwellendrehzahl detektiert wird.

Der vorliegenden Erfindung liegt die Aufgabe zugrunde, ein Verfahren zum Betätigen einer Kupplung eines hydrodynamischen Drehmomentwandlers zu schaffen, mittels welchem die Kupplung des hydrodynamischen Drehmomentwandlers effektiv einsatzbar ist.

Die Aufgabe wird mit einem, auch die kennzeichnenden Merkmale des Hauptanspruchs aufweisenden, gattungsgemäßen Verfahren zum Betätigen der Kupplung des hydrodynamischen Drehmomentwandlers gelöst.

Erfindungsgemäß wird die im Schließsinne betätigte Kupplung des hydrodynamischen Drehmomentwandlers dann im Öffnungssinne betätigt, wenn die Leistung am Nebenabtrieb einen zuvor definierten Wert überschreitet.

Dadurch ist es möglich, dass die Kupplung des hydrodynamischen Drehmomentwandlers im Öffnungssinne betätigt ist, wenn beispielsweise der Radlader mit seiner Schaufel in das zu befördernde Gut einfährt und zum Füllen der Schaufel diese hebt. Hierbei benötigt der Nebenabtrieb eine hohe Motordrehzahl, um genügend Leistung für die Arbeitshydraulik zu erzeugen.

In einer weiteren Ausgestaltungsform der Erfindung wird der Fahrzustand des Fahrzeugs detektiert, und im Falle einer Bergabfahrt bleibt die Kupplung des Drehmomentwandlers im Schließsinne betätigt, auch wenn die angeforderte Leistung am Nebenabtrieb über dem zuvor definierten Wert liegt, wenn sich das Getriebeeingangsdrehmoment unterhalb eines zuvor definierten Drehmoments oder sich das Fahrzeug oberhalb einer zuvor definierten Geschwindigkeit befindet. Dadurch ist gewährleistet, dass bei Bergabfahrt das Bremsmoment des Antriebsmotors mit ausgenutzt werden kann.

Vorzugsweise ist der Nebenabtrieb als hydraulische Pumpe ausgebildet, wobei die Leistung des Nebenabtriebs mittels des hydraulischen Drucks der Pumpe und deren Drehzahl ermittelbar ist. Der hydraulische Druck kann entweder direkt an der hydraulischen Pumpe oder in den Hubzylindern der Schaufel des Radladers ermittelt werden.

Es besteht auch die Möglichkeit, über den Vorsteuerdruck in der Hydraulik die Leistung zu ermitteln. Um ein Überschreiten des zuvor definierten Drucks zu erkennen, besteht die Möglichkeit, dieses mittels eines Druckschalters zu detektieren.

In einer weiteren Ausgestaltungsform der Erfindung steuert eine elektronische Steuereinheit, beispielsweise die Getriebeelektronik, das Öffnen und Schließen der Kupplung des hydrodynamischen Drehmomentwandlers, wobei die Signale, beispielsweise des Druckschalters, die Turbinen- und Motordrehzahl oder das Motordrehmoment, der Getriebeelektronik zugeführt werden.

In einer weiteren Ausgestaltungsform der Erfindung ist die Motorelektronik mit der Getriebesteuerung über CAN-Signale verbunden, wobei die Motorelektronik das Motordrehmoment an die Getriebesteuerung übermittelt und diese aus diesem Motordrehmoment eine Bergabfahrt detektiert und dabei die Kupplung des Drehmomentwandlers so ansteuert, dass diese im Schließsinne betätigt bleibt.

## Patentansprüche

1. Verfahren zum Betätigen einer Kopplung eines hydrodynamischen Drehmomentwandlers in einem Fahrzeug, wobei die Kupplung beim Betätigen im Schließsinne den Antrieb des hydrodynamischen Drehmomentwandlers mit dem Abtrieb des hydrodynamischen Drehmomentwandlers verbindet, und beim Betätigen im Öffnungssinne den Antrieb des hydrodynamischen Drehmomentwandlers vom Abtrieb des hydrodynamischen Drehmomentwandlers trennt, wobei ein Nebenabtrieb permanent mit dem Antrieb in Wirkverbindung steht, **dadurch gekennzeichnet, dass** dass die Kupplung im Öffnungssinne betätigt wird, wenn die Leistung am Nebenabtrieb einen zuvor definierten Wert überschreitet.

2. Verfahren zum Betätigen einer Kupplung nach Anspruch 1, **dadurch gekennzeichnet, dass** der Nebenabtrieb als hydraulische Pumpe ausgebildet ist.

3. Verfahren zum Betätigen einer Kupplung nach Anspruch 2, **dadurch gekennzeichnet, dass** die Leistung der hydraulischen Pumpe mittels des hydraulischen Drucks der Pumpe und der Drehzahl der Pumpe ermittelt wird.

4. Verfahren zum Betätigen einer Kupplung nach Anspruch 1, **dadurch gekennzeichnet, dass** nach im Öffnungssinne betätigter Kupplung die Kupplung im Schließsinne betätigt wird, wenn die Leistung des Nebenabtriebs unter den zuvor definierten Wert fällt und das Drehmoment des Turbinenrades im geschlossenen Zustand der Kupplung und im geöffneten Zustand der Kupplung nahezu gleich ist.

5. Verfahren zum Betätigen einer Kupplung nach Anspruch 1, **dadurch gekennzeichnet, dass** die Kupplung nur dann im Öffnungssinne betätigt wird, wenn bei einer Bergabfahrt des Fahrzeugs sich das Fahrzeug unterhalb einer zuvor definierten Geschwindigkeit befindet.

6. Verfahren zum Betätigen einer Kupplung nach Anspruch 1, **dadurch gekennzeichnet, dass** die Kupplung nur dann im Öffnungssinne betätigt wird, wenn bei einer Bergabfahrt des Fahrzeugs sich das Getriebeeingangsdrehmoment oberhalb eines zuvor definierten Drehmoments befindet.

7. Verfahren zum Betätigen einer Kupplung nach Anspruch 1, **dadurch gekennzeichnet, dass** eine Getriebeelektronik die Drehzahl des Antriebs, die Drehzahl des Abtriebs, die Bremspedalstellung oder den Bremsdruck und das Drehmoment eines Antriebsmotors ermittelt und die Kupplung ansteuert.

8. Verfahren zum Betätigen einer Kupplung nach Anspruch 1, **dadurch gekennzeichnet, dass** das Drehmoment eines Antriebsmotors mittels CAN-Signal an eine Getriebesteuereinheit übermittelt wird, welche dieses für die Detektierung des Bergabfahrt-Zustandes verwendet.

## Claims

1. Method for actuating a clutch of a hydrodynamic torque converter in a vehicle, wherein the clutch, when actuated in a closing sense, connects the drive input of the hydrodynamic torque converter to the drive output of the hydrodynamic torque converter, and when actuated in the opening sense, separates the drive input of the hydrodynamic torque converter from the drive output of the hydrodynamic torque converter, wherein a power takeoff is permanently operatively connected to the drive input, **characterized in that** the clutch is actuated in the opening sense when the power at the power takeoff exceeds a predefined value.

2. Method for actuating a clutch according to Claim 1, **characterized in that** the power takeoff is in the form of a hydraulic pump.

3. Method for actuating a clutch according to Claim 2, **characterized in that** the power of the hydraulic pump is determined on the basis of the hydraulic pressure of the pump and the rotational speed of the pump.

4. Method for actuating a clutch according to Claim 1, **characterized in that**, after the clutch has been actuated in the opening sense, the clutch is actuated in the closing sense if the power of the power takeoff falls below the predefined value and the torque of the turbine wheel is approximately the same in the closed state of the clutch as in the open state of the clutch.

5. Method for actuating a clutch according to Claim 1, **characterized in that** the clutch is actuated in the opening sense only if the vehicle is below a predefined speed when travelling downhill.

6. Method for actuating a clutch according to Claim 1, **characterized in that** the clutch is actuated in the opening sense only if the transmission input torque is above a predefined torque when the vehicle is travelling downhill.

7. Method for actuating a clutch according to Claim 1, **characterized in that** transmission electronics determine the rotational speed of the drive input, the rotational speed of the drive output, the brake pedal position or the brake pressure and the torque of a drive engine, and actuate the clutch.

8. Method for actuating a clutch according to Claim 1, **characterized in that** the torque of a drive engine is transmitted by means of a CAN signal to a transmission control unit, which uses said signal for detecting the downhill travel state.

## Revendications

1. Procédé pour l'actionnement d'un embrayage d'un convertisseur de couple hydrodynamique dans un véhicule, l'embrayage, lors de l'actionnement dans le sens de fermeture, reliant l'entraînement du convertisseur de couple hydrodynamique à la prise de force du convertisseur de couple hydrodynamique, et lors de l'actionnement dans le sens de l'ouverture, séparant l'entraînement du convertisseur de couple hydrodynamique de la prise de force du convertisseur de couple hydrodynamique, une prise de force auxiliaire étant en liaison fonctionnelle permanente avec l'entraînement, **caractérisé en ce que** l'embrayage est actionné dans le sens de l'ouverture lorsque la puissance au niveau de la prise de force auxiliaire dépasse une valeur définie préalablement.

2. Procédé pour l'actionnement d'un embrayage selon la revendication 1, **caractérisé en ce que** la prise de force auxiliaire est réalisée sous forme de pompe hydraulique.

3. Procédé pour l'actionnement d'un embrayage selon la revendication 2, **caractérisé en ce que** la puissance de la pompe hydraulique est déterminée au moyen de la pression hydraulique de la pompe et de la vitesse de rotation de la pompe.

4. Procédé pour l'actionnement d'un embrayage selon la revendication 1, **caractérisé en ce que** l'embrayage est actionné dans le sens de la fermeture après qu'il a été actionné dans le sens de l'ouverture, lorsque la puissance de la prise de force auxiliaire chute en dessous de la valeur définie préalablement et que le couple de la roue de turbine dans l'état fermé de l'embrayage et dans l'état ouvert de l'embrayage est pratiquement identique.

5. Procédé pour l'actionnement d'un embrayage selon la revendication 1, **caractérisé en ce que** l'embrayage n'est actionné dans le sens de l'ouverture que lorsque le véhicule se trouve en dessous d'une vitesse définie préalablement dans le cas où le véhicule descend une pente.

6. Procédé pour l'actionnement d'un embrayage selon la revendication 1, **caractérisé en ce que** l'embrayage n'est actionné dans le sens de l'ouverture que lorsque le couple d'entrée de la boîte de vitesses se trouve au-dessus d'un couple défini préalablement dans le cas où le véhicule descend une pente.

7. Procédé pour l'actionnement d'un embrayage selon la revendication 1, **caractérisé en ce qu'**une électronique de boîte de vitesses détermine la vitesse de rotation de l'entraînement, la vitesse de rotation de la prise de force, la position de la pédale de frein ou la pression de freinage et le couple d'un moteur d'entraînement et commande l'embrayage.

8. Procédé pour l'actionnement d'un embrayage selon la revendication 1, **caractérisé en ce que** le couple d'un moteur d'entraînement est transmis au moyen d'un signal CAN à une unité de commande de boîte de vitesses, qui utilise celui-ci pour détecter l'état de descente de pente.
